# EUROPEAN PATENT APPLICATION

(11) **EP 4 717 413 A1**
(43) Date of publication of application: **01.04.2026**
(21) Application number: 25204189.2
(22) Date of filing: 24.09.2025
(51) Int. Cl.: B25J 9/10, B25J 9/12, B25J 9/14

(54) **SUPPORTING APPARATUS FOR ROBOT AND ROBOT**

(30) Priority: 27.09.2024 CN 202411364985
(71) Applicant: BEIJING YOUZHUJU NETWORK TECHNOLOGY CO. LTD., Beijing 101299 (CN)
(72) Inventor: LIU, Yunfei, 100028 Beijing (CN)
(74) Representative: Isarpatent

(57) **Abstract**

Embodiments of the disclosure provide a supporting apparatus for a robot and a robot. The supporting apparatus comprises: at least one supporting component, each comprising: a pair of joint assemblies respectively arranged at both ends of the supporting component in an extending direction and respectively rotatably coupled to the first component and the second component of the robot; a pair of driving component arranged between the pair of joint assemblies and respectively comprising a fixing part and a linear driving rod, end parts of the pair of linear driving rods being rotatably coupled to the pair of joint assemblies about the rotation axis; and a pair of force-bearing components arranged to extend in the extending direction and at least partially clamp the pair of joint assemblies, the force-bearing components comprising a pair of hinge points respectively rotatably coupled to the pair of joint assemblies.

## Description

### FIELD

Example embodiments of the present disclosure generally relate to the field of robots, and in particular, to a supporting apparatus for a robot and a robot.

### BACKGROUND

Humanoid robots have shown great potential in various industrial, service, and home applications. Their highly-simulated human body structure enables them to complete complex operation and replace humans in repeated or dangerous work. Especially in scenarios where the robots can move and process an object flexibly like humans, the robots have a wider application prospect. However, when implementing these functions, humanoid robots usually face many challenges, especially how to ensure the stability, flexibility and output power of each joint, while maintaining lightweight and compactness of the structure, which puts forward high rigidity and high efficiency requirements for robot design.

### SUMMARY

In a first aspect of the present disclosure, a supporting apparatus for a robot is provided. The supporting apparatus comprising: at least one supporting component, each comprising: a pair of joint assemblies respectively arranged at both ends of the supporting component in an extending direction and respectively rotatably coupled to a first component and a second component of the robot; a pair of driving components arranged between the pair of joint assemblies and respectively comprising a fixing part and a linear driving rod, wherein end parts of the pair of linear driving rods are respectively rotatably coupled to the pair of joint assemblies about a rotation axis and adapted to perform telescopic movement along their own axes to drive the supporting component to rotate relative to the first component and the second component; and a pair of force-bearing components arranged to extend in the extending direction and at least partially clamp the pair of joint assemblies, the force-bearing components comprising a pair of hinge points respectively rotatably coupled to the pair of joint assemblies.

In some embodiments, at least one supporting component comprises a pair of supporting components , the pair of supporting components being arranged side by side along the rotation axis, and the supporting apparatus further comprising a connecting frame fixedly coupled between the pair of supporting components .

In some embodiments, the supporting apparatus further comprises a pair of balancing arms adapted to respectively rotatably coupled to the fixing parts of the pair of driving components, and each of the pair of balancing arms comprising a central fulcrum portion rotatably coupled to the connecting frame.

In some embodiments, each balancing arm comprises coupling portions located at two ends, and the coupling portions are coupled to the corresponding fixing parts via ball hinge components.

In some embodiments, each of the pair of joint assemblies comprises a four-bar linkage and one link of the four-bar linkage is implemented by a portion of the pair of force-bearing components.

In some embodiments, the pair of force-bearing components comprises a force-bearing plate and a rib structure arranged on the force-bearing plate.

In some embodiments, the supporting apparatus further comprises: at least one outer reinforcement member, two ends of the at least one outer reinforcement member are respectively coupled to the pair of force-bearing components and located outside of the pair of driving components.

In some embodiments, at least one outer reinforcement member is configured as a frame structure.

In some embodiments, the pair of driving components are arranged side by side in a front-rear direction perpendicular to the rotation axis.

In a second aspect of the present disclosure, a robot is provided. The robot comprises a first component and a second component; and the supporting apparatus according to the first aspect, arranged between the first component and the second component.

It should be understood that the content described in this content section is not intended to limit the key features or important features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a perspective view of a leg portion of a robot according to embodiments of the present disclosure;
FIG. 2 illustrates a rear view of a leg portion according to embodiments of the present disclosure;
FIG. 3 illustrates a cross-sectional view of the leg portion shown in FIG. 2 taken along from A-A; and
FIG. 4 is a simplified schematic structural diagram of a supporting apparatus according to embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to embodiments set forth herein, but rather, these embodiments are provided for a more thorough and complete understanding of the present disclosure. It should be understood that the drawings and embodiments of the present disclosure are for exemplary purposes only and are not intended to limit the scope of the present disclosure.

It should be noted that the title of any section / subsection provided herein is not limiting. Various embodiments are described throughout and any type of embodiments may be included in any section / subsection. Furthermore, embodiments described in any section / subsection may be combined in any manner with the same section / subsection and / or any other embodiment described in different sections / subsections.

In the description of embodiments of the present disclosure, the terms "comprising" and the like should be understood to comprise "comprising but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

As mentioned above, Humanoid robots have shown great potential for application in industry, service, and home fields. They simulate the structural design of the human body so that they can perform complex tasks and can replace humans in repeated or dangerous work environments. Especially in the case where the robot can flexibly move and manipulate objects, their application range is more extensive. However, such robots often encounter various challenges in achieving these functions, such as how to ensure the stability, flexibility and force output of the joints, while also maintaining the portability and compactness of the overall structure. These requirements put forward the dual pursuit of high rigidity and high efficiency in the design of the robot.

In existing robot thigh design schemes, complex motion control of joints often needs to be achieved through multiple drivers, and cooperation among multiple drivers may cause over-constraint problems of mechanical systems. This not only increases the complexity of the structural, but also may affect motion efficiency. Embodiments of the present disclosure provide a high stiffness robot thigh configuration design (also referred to as a supporting apparatus) and associated robots to address the above issues or other potential issues. In addition, according to the supporting apparatus provided by embodiments of the present disclosure, by outputting the force of the two linear modules to the same joint, the over-constraint phenomenon is avoided, the high-density output power of the joint is ensured, and a more reliable and efficient solution is provided for application of the humanoid robot in the multi-field.

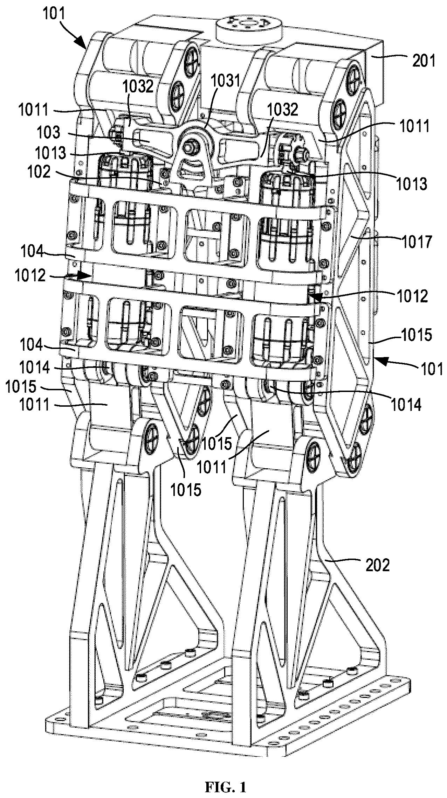

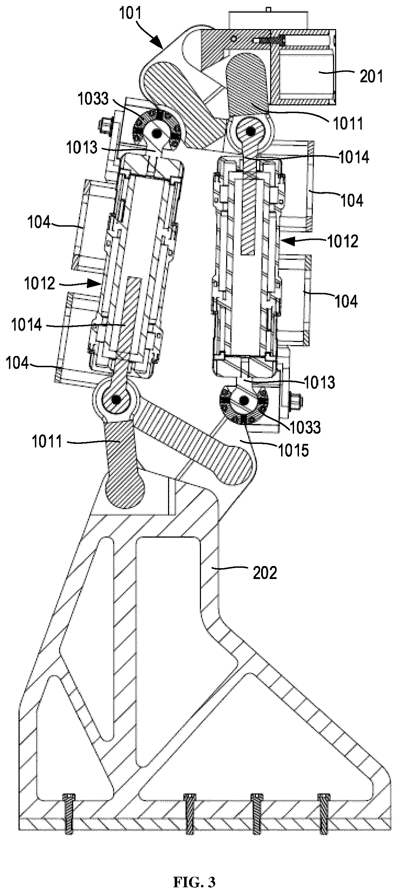

The supporting apparatus and the robot according to embodiments of the present disclosure will be described below with reference to FIG. 1 to FIG. 3. FIGS. 1-3 respectively show perspective, rear, and cross-sectional views of the leg portion of the robot comprising the supporting apparatus. The robot according to embodiments of the present disclosure may refer to any suitable robot, for example, may comprise, but is not limited to: a humanoid robot, a crawling robot, an industrial robot, a service robot, a full-automatic robot, a semiautomatic robot, a remote control robot, a robotic arm robot, and the like.

For example, an example structure of the robot according to embodiments of the present disclosure is described by taking the humanoid robot as an example. The humanoid robot may comprise the following main components: a head, a torso, an arm, a hand, a leg, and a foot. These components may be connected by the joint apparatus according to embodiments of the present disclosure to mimic the natural posture and motion of humans. Their connection design not only needs to ensure the flexibility between components, but also needs to have certain stability and strength to deal with complex actions and loads.

The head is usually mounted at the top of the torso, and is responsible for sensing and processing external information. The head may comprise a camera (equivalent to "eyes"), a microphone (equivalent to "ears"), and various sensors for sensing the surrounding environment and interacting with the outside world. The head and the torso are connected through a neck joint, so that the robot can flexibly look around.

The torso is the most core part of the humanoid robot, and houses a battery, a processor, a main control board and a core sensor. It is not only the connection center of other components but is also responsible for the stability of the whole robot. The torso requires a strong structure to support the upper body and the lower body, and also needs to maintain a certain flexibility, so that the robot can perform complex motions, such as bending, turning and the like. Generally, by connecting shoulder and hip joints to the arms and legs, the design inside the torso must ensure that sufficient space is reserved for the joint motors, cables, and control systems.

The arm is connected to the torso through the shoulder joint, and is usually composed of an upper arm, a forearm and the hand. The shoulder joint is multi-degree-of-freedom, and can achieve front-rear, left-right swing and rotation motion. The upper arm is connected to the forearm through an elbow joint. The design of the arm needs to balance between flexibility and load capability, particularly when the robot performs handling or grabbing tasks, and needs to bear corresponding forces.

The hand is a key part of the robot to perform fine operations, usually comprises a plurality of fingers, each finger has a plurality of joints, and the joints may be controlled by micro servo motors. The hand is connected to the forearm through a wrist joint, the wrist joint generally has a multi-degree-of-freedom rotation function, the joint apparatus of embodiments of the present disclosure may also be used, thereby allowing the hand to freely adjust the angle and direction. The design of the hand emphasizes precision so that the robot can simulate actions such as grasping, pinching and the like of human hands.

The leg is connected to the torso through the hip joint and is an important part for supporting the robot to walk. The hip joint is a multi-degree-of-freedom joint and is responsible for controlling the front-rear swinging, lateral swinging and rotation actions of the leg. The leg is divided into a thigh and a shank connected by a knee joint. The main function of the knee joint is flexion and extension, and supports the robot to maintain balance when walking and standing. To achieve stable gait control, the leg is usually equipped with multiple sensors, such as angle sensors and accelerometers, for monitoring changes in robot pose and gait in real time.

The thigh portion of the humanoid robot mentioned above may be implemented by using a supporting apparatus according to embodiments of the present disclosure, the supporting apparatus is rotatably connected to the torso portion through the hip joint, and on the other hand, the knee joint is rotatably connected to the shank portion, as shown in FIG. 1 to FIG. 3. In the following, the torso portion and the shank portion will also be respectively referred to as a first portion and a second portion. The concept of the present disclosure will be described herein mainly by taking the supporting apparatus as an example of the thigh portion of the robot. Of course, it should be understood that the supporting apparatus may also be used as another portion of the robot, which will not be repeated hereinafter.

As shown in FIGS. 1-3, the supporting apparatus according to embodiments of the present disclosure generally comprises at least one supporting component 101. In embodiments shown in FIGS. 1-3, it is shown that the supporting apparatus has two supporting components 101 arranged in the left-right direction. Hereinafter, the concept of the present disclosure will be described mainly by taking the leg apparatus comprising two supporting components 101 as an example, it should be understood that the case of having one supporting component 101 or more supporting components 101 is similar, and will not be repeated hereinafter.

Each supporting component 101 comprises a pair of joint assemblies 1011, a pair of driving components 1012, and a pair of force-bearing components 1015. When the supporting apparatus is used as the thigh portion, the pair of joint assemblies 1011 also respectively correspond to the hip joint and the knee joint. The pair of joint assemblies 1011 are respectively arranged at both ends of the supporting component 101 in the extending direction, and are respectively rotatably coupled to a first component 201 (e.g., a torso portion) and a second component 202 (e.g., a shank portion) of the robot.

The pair of driving components 1012 are arranged between the pair of joint assemblies 1011 and respectively comprises a fixing part 1013 and a linear driving rod 1014. End parts of the linear driving rods 1014 of the pair of driving components 1012 are respectively rotatably coupled to the pair of joint assemblies 1011 about a rotation axis. The linear driving rod 1014 can be driven to perform telescopic movement along own axes thereof to drive the supporting component 101 to rotate relative to the first component 201 and the second component 202. In some embodiments, the driving components 1012 may be linear motors.

Of course, it should be understood that embodiments of the driving components 1012 adopting the linear motors are merely illustrative and are not intended to limit the scope of the present disclosure. In some alternative embodiments, the driving components 1012 may also comprise a hydraulic or pneumatic driving component having the linear driving rod, which will not be repeated hereinafter.

The pair of force-bearing components 1015 are respectively arranged to extend in an extending direction, and at least partially clamp the pair of joint assemblies 1011. According to the relationship between the joint assembly 1011 and the driving component 1012, the driving component 1012 is also located between the pair of force-bearing components 1015. The pair of force-bearing components 1015 have the same structure and comprise at least a pair of hinge points. The pair of hinge points are respectively rotatably coupled to the pair of joint assemblies 1011.

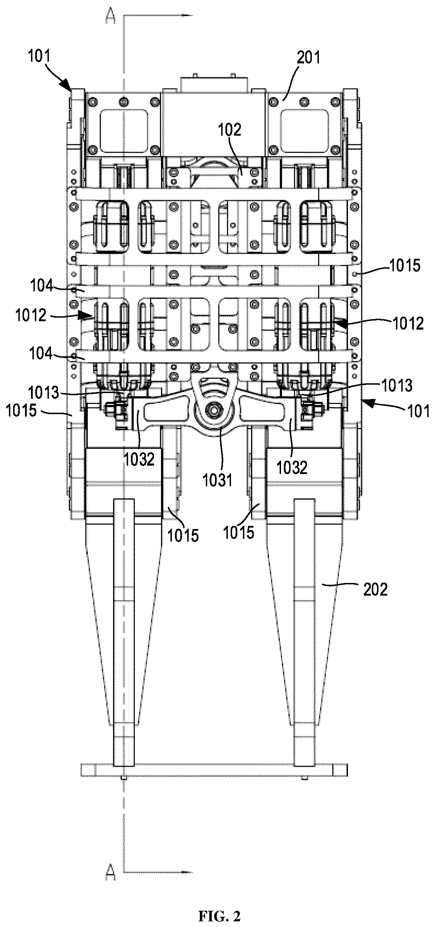

If the extension direction of the rotation axis mentioned above is taken as the left-right direction, the direction perpendicular to the extension direction (i.e., the direction perpendicular to the paper plane shown in FIG. 2) is the front-rear direction, the pair of force-bearing components are arranged on both sides of the pair of driving components 1012 and the pair of joint assemblies 1011 in the left-right direction, and the pair of driving components 1012 are arranged side by side in the front-rear direction, one is used for driving the first joint (for example, the hip joint) in the pair of joint assemblies 1011, and the other is used for driving the second joint (for example, the knee joint).

By arranging the pair of force-bearing components 1015, the load can be effectively dispersed and uniformly distributed, so that the bearing capacity of the leg structure can be significantly improved. Each force-bearing component 1015 can relieve stress concentrations of a single part, thereby reducing the possibility of deformation and fatigue. In addition, more force-bearing components 1015 can strengthen the connection between the components of the body, making the overall structure more stable, thereby greatly improving the overall rigidity of the body, and improving the stability and the external interference resistance of the body under complex working conditions. This design improvement helps to extend the service life of the supporting apparatus and improve its performance in high load scenarios.

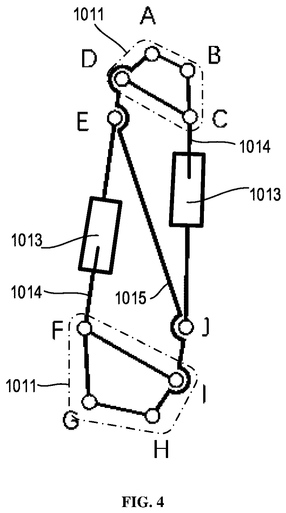

FIG. 4 is a simplified schematic structural diagram of a supporting apparatus according to embodiments of the present disclosure, wherein the ABCD quadrangle represents the first joint, FGHI represents the second joint. It can be seen that both the first joint and the second joint are four-bar linkages, ADEJIH represents the hinge points between the force-bearing components 1015 and other components. It can be seen from FIG. 4, in addition to the D point and the I point being coupled to the first joint and the second joint respectively as mentioned above, one link of the four-bar linkage mechanisms is implemented by a part of the force-bearing component 1015.

With continued reference to FIG. 4, an end part of the linear driving rod 1014 of one driving component 1012 is rotatably coupled to a C hing point of the first joint and an end of the linear driving rod 1014 of the other driving component 1012 is rotatably coupled to a F hinge point of the second joint. As the linear driving rod 1014 of the driving component 1012 extends and retracts, the joint assembly 1011 is driven to move.

In embodiments shown in FIGS. 1-3 where the supporting apparatus comprises a pair of supporting components 101, the pair of supporting components 101 are arranged side by side along the rotation axis (i.e., the left-right direction). In order to improve structural rigidity, the supporting apparatus further comprises a connecting frame 102 fixedly coupled between the pair of supporting components 101. The connecting frame 102 can connect the pair of supporting components 101, thereby further improving structural rigidity.

In order to obtain greater output force of the two joint assemblies 1011, the two driving components 1012 for controlling the same joint are connected together in parallel, which requires that the two driving components 1012 must be strictly synchronized, otherwise, internal stress will be formed between the driving components 1012, and the driving components 1012 will be damaged in severe cases. Therefore, in order to avoid this situation, the supporting apparatus according to embodiments of the present disclosure further comprises a pair of balancing arms 103. Each of the pair of balancing arms 103 comprises a central fulcrum portion 1031, the central fulcrum portion 1031 is rotatably coupled to the connecting frame 102. The balancing arm 103 is rotatable about the central fulcrum portion 1031.

The pair of balancing arms 103 are respectively adapted to be rotatably coupled to the fixing parts 1013 of the pair of driving components 1012. For example, as shown in FIG. 1, two ends of the front balancing arm 103 are respectively coupled to the fixing part 1013 for driving the driving component 1012 of the second joint, as shown in FIG. 2, two ends of the rear balancing arm 103 are respectively coupled to the fixing part 1013 for driving the driving component 1012 of the first joint. In addition, in some embodiments, each balancing arm 103 comprises coupling portions 1032 located at two ends, and the coupling portions 1032 are coupled to the corresponding fixing parts 1013 through ball hinge components 1033. In this way, when there is an unsynchronized problem between the two driving components 1012 connected to each balancing arm 103, the problem can be eliminated by the rotation of the balancing arm 103 around the central fulcrum portion 1031, thereby avoiding the damage of the driving components 1012 and improving the reliability of the supporting apparatus.

In some embodiments, the force-bearing component 1015 may be a force-bearing plate, i.e., a plate-shaped component. In order to improve the structural strength while reducing the structural weight, in some embodiments, the force-bearing component 1015 may further comprise a rib structure 1017 arranged on the force-bearing plate.

In some embodiments, the supporting apparatus may further comprise at least one outer reinforcement member 104. Two ends of the outer reinforcement member 104 in the left-right direction are respectively coupled to the pair of force-bearing components 1015 and located outside the pair of driving components 1012. In embodiments as shown in FIG. 1 to FIG. 3, four outer reinforcement members 104 are respectively comprised, wherein two outer reinforcement members are arranged at the front part of the force-bearing component 1015 in the vertical direction, and the other two outer reinforcement members are arranged at the rear part of the force-bearing component 1015 in the vertical direction.

In the case of having a plurality of pairs of force-bearing components 1015, in addition to the left and right ends being coupled to the outermost force-bearing components 1015, each outer reinforcement member 104 may also comprise an additional coupling portion in the middle for respectively coupled to the force-bearing components 1015 located in the middle. In this way, the force-bearing components 1015 can be connected as a whole, thereby further increasing the bearing capacity of the supporting apparatus. To enable increased bearing capability while reducing weight, at least one outer reinforcement member 104 may be configured as a frame structure as shown in FIGS. 1-3. In addition, in addition to the two ends, the middle part of the outer reinforcement member 104 may protrude outward by an arc transition or a bend portion, thereby avoiding interference to the inner member of the supporting apparatus as much as possible and improving reliability.

Various implementations of the present disclosure have been described above, which are exemplary, not exhaustive, and are not limited to the implementations disclosed. Many modifications and variations will be apparent to those of ordinary skill in the art without departing from the scope of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A supporting apparatus for a robot, comprising: at least one supporting component(101) each comprising:
a pair of joint assemblies (1011) respectively arranged at both ends of the supporting component (101) in an extending direction and respectively rotatably coupled to a first component (201) and a second component (202) of the robot;
a pair of driving components (1012) arranged between the pair of joint assemblies (1011) and respectively comprising a fixing part (1013) and a linear driving rod (1014), wherein end parts of the pair of linear driving rods (1014) are respectively rotatably coupled to the pair of joint assemblies (1011) about a rotation axis, and adapted to perform telescopic movement along their own axes to drive the supporting component (101) to rotate relative to the first component (201) and the second component (202); and
a pair of force-bearing components (1015) arranged to extend in the extending direction and at least partially clamp the pair of joint assemblies (1011), the force-bearing components (1015) comprising a pair of hinge points respectively rotatably coupled to the pair of joint assemblies (1011).

2. The supporting apparatus of claim 1, wherein at least one supporting component (101) comprises a pair of supporting components (101), the pair of supporting components(101) being arranged side by side along the rotation axis and further comprising:
a connecting frame (102) fixedly coupled between the pair of supporting components (101).

3. The supporting apparatus of claim 2, further comprising:
a pair of balancing arms (103) adapted to respectively rotatably coupled to the fixing parts (1013) of the pair of driving components (1012), and each of the pair of balancing arms (103) comprising a central fulcrum portion (1031) rotatably coupled to the connecting frame (102).

4. The supporting apparatus of claim 3, wherein each of the pair of balancing arms (103) comprises coupling portions (1032) located at both ends, and the coupling portions (1032) are coupled to the corresponding fixing parts (1013) via ball hinge components (1033).

5. The supporting apparatus of any of claims 1-4, wherein each of the pair of joint assemblies (1011) comprises a four-bar linkage and one link of the four-bar linkage is implemented by a portion of the pair of force-bearing components (1015).

6. The supporting apparatus of any of claims 1-4, wherein the pair of force-bearing components (1015) comprises a force-bearing plate and a rib structure (1017) arranged on the force-bearing plate.

7. The supporting apparatus of any of claims 1-4, further comprising:
at least one outer reinforcement member (104), two ends of the at least one outer reinforcement member (104) respectively coupled to the pair of force-bearing components (1015), and located outside of the pair of driving components (1012).

8. The supporting apparatus of claim 7, wherein the at least one outer reinforcement member (104) is configured as a frame structure.

9. The supporting apparatus of any of claims 1-4 and 8, wherein the pair of driving components (1012) are arranged side by side in a front-rear direction perpendicular to the rotation axis.

10. A robot comprising:
a first component (201) and a second component (202); and
the supporting apparatus of any of claims 1-9, arranged between the first component (201) and the second component (202).
